# EUROPÄISCHE PATENTSCHRIFT

(11) **EP 3 432 754 B1**
(45) Veröffentlichungstag und Bekanntmachung des Hinweises auf die Patenterteilung: **04.12.2019**
(21) Anmeldenummer: 17701129.3
(22) Anmeldetag: 24.01.2017
(51) Int. Cl.: A45C 13/02, A45C 7/00, B62J 9/00

(54) **GEPÄCKBEHÄLTNIS MIT INTEGRIERTER TASCHE**
LUGGAGE CONTAINER WITH INTEGRATED BAG
BAGAGE AVEC POCHE INTÉGRÉE

(30) Priorität: 23.03.2016 DE 102016204793
(43) Veröffentlichungstag der Anmeldung: 30.01.2019
(73) Patentinhaber: Bayerische Motoren Werke Aktiengesellschaft, 80809 München (DE)
(72) Erfinder: SIEVERS-PAULSEN, Johann, 85354 Freising (DE); REINHART, Peter, 82380 Peissenberg (DE)
(86) Internationale Anmeldenummer: PCT/EP2017/051352
(87) Internationale Veröffentlichungsnummer: WO 2017/162346

(56) Entgegenhaltungen:
- EP-A2- 0 517 265
- CA-A1- 2 635 328
- GB-A- 2 482 126
- GB-A- 2 496 759
- US-B1- 7 086 437

## Beschreibung

Die Erfindung betrifft ein Gepäckbehältnis gemäß dem Oberbegriff des Patentanspruchs 1.

Im Innenraum eines Koffers, sind kleine Gegenstände vergleichsweise schwer zu verstauen und zu sichern, wenn der Koffer ansonsten leer oder lediglich teilweise gefüllt ist. Dies hat zur Folge, dass sich die Gegenstände bei einer Bewegung des Koffers innerhalb des Innenraums bewegen und beschädigt werden können.

Dies tritt in besonders hohem Maße bei hochdynamischen Bewegungen des Koffers auf, wie dies beispielsweise bei Gepäckbehältnissen für Motorräder oder motorradähnliche Fahrzeuge der Fall ist.

Verschiedene Gepäckbehältnisse sind beispielsweise aus der GB 2 482 126 A, US 7 086 437 B1 und EP 0517 265 A2 bekannt.

Aufgabe der Erfindung ist es daher, ein Gepäckbehältnis bereitzustellen, in welchem kleinere Gegenstände sicher verstaut werden können, insbesondere ein entsprechendes Gepäckbehältnis für Motorräder und dergleichen. Diese Aufgabe wird gelöst mit einem Gepäckbehältnis mit den Merkmalen des Patentanspruchs 1.

Demnach wird ein Gepäckbehältnis mit integrierter Tasche bereitgestellt, wobei das Gepäckbehältnis eine einen Gepäckraum begrenzende Innenwandung aufweist, und die Tasche mittels einer Verbindungsanordnung lösbar mit der Innenwandung des Gepäckbehältnisses verbunden ist. Die Verbindungsanordnung umfasst mindestens einen Verbindungsabschnitt, welcher lösbar in jeweils eine den Verbindungsabschnitt aufnehmende Ausnehmung eingreifend ausgebildet ist.

Die Tasche wird also innerhalb des Gepäckbehältnisses an der Innenwandung befestigt. Dies bedeutet, dass die Tasche gleich groß oder kleiner als der Gepäckraum dimensioniert ist. Mit anderen Worten weist die Tasche ein Gesamtvolumen auf, welches gleich oder vorzugsweise kleiner als ein Volumen des durch die Innenwandung begrenzten Gepäckraumes ist. Die Verbindungsanordnung ist lösbar ausgebildet, so dass die hiermit an der Innenwandung befestigte Tasche bei Bedarf gelöst und dem Gepäckbehältnis auf einfache Art und Weise entnommen werden kann. Im diesem Falle steht das gesamte Innenvolumen des Gepäckraums für andere Gegenstände zur Verfügung.

Die Verbindungsanordnung ist mindestens zweiteilig ausgeführt, wobei ein oder mehrere Verbindungsabschnitte zum Herstellen der Verbindung jeweils in eine entsprechend vorgesehene Ausnehmung eingreifen. Zum Lösen der Verbindung und der Entnahme der Tasche wird der mindestens eine Verbindungsabschnitt aus dem Eingriff mit der zugehörigen Ausnehmung entfernt.

Vorzugsweise ist der mindestens eine Verbindungsabschnitt hakenförmig oder laschenförmig ausgebildet. Dies ermöglicht ein leichtes und benutzerfreundliches Einschieben des einen oder der mehreren Verbindungsabschnitte in einer gemeinsamen Einschubrichtung in die entsprechenden Ausnehmungen. Hierzu sind die Verbindungsabschnitte parallel und gleichgerichtet zueinander angeordnet. Vorzugsweise ist die Einschubrichtung von einer Öffnung des Gepäckbehältnisses in Richtung eines Bodens oder einer Rückwand des Gepäckbehältnisses beziehungsweise dessen Innenwandung ausgerichtet.

Zum Beispiel können der mindestens eine Verbindungsabschnitt der Tasche und die aufnehmende Ausnehmung der Innenwandung zugeordnet sein. Alternativ können der mindestens eine Verbindungsabschnitt der Innenwandung und die aufnehmende Ausnehmung der Tasche zugeordnet sein.

Gemäß einer weiteren Ausführungsform kann das Gepäckbehältnis eine Zentriervorrichtung umfassen, um die Tasche in einer definierten Soll-Position zu zentrieren. Diese ermöglicht die präzise Anordnung und Befestigung der Tasche in der gewünschten Einbau-Position, die im Folgenden auch als die Soll-Position bezeichnet ist.

Die Zentriervorrichtung kann zum Beispiel eine Zentrierausnehmung und einen in die Zentrierausnehmung eingreifenden Zentrierfortsatz umfassen. Vorzugsweise ist die Zentriervorrichtung derart ausgebildet, dass beim Einsetzen der Tasche, also beispielsweise beim Einschieben der Verbindungsabschnitte in die Ausnehmungen gleichzeitig auch der Zentrierfortsatz in die Zentrierausnehmung eingebracht und ausgerichtet wird, um auf diese Weise für die korrekte Ausrichtung und Positionierung zu sorgen. Gemäß einer Ausführungsform ist der Zentrierfortsatz als Rippe ausgebildet, die in ein Gegenlager, die Zentrierausnehmung, eingreift.

Beispielsweise kann der Zentrierfortsatz an einer Rückwand und/oder an einem Boden der Innenwandung angeordnet und die Zentrierausnehmung der Tasche, insbesondere einer Rückwand der Tasche, zugeordnet sein.

Des Weiteren ist die Tasche mittels mindestens einer lösbaren Arretierungsvorrichtung mit der Innenwandung zum Arretieren in der definierten Soll-Position verbindbar, insbesondere mit einer Rückwand und/oder einem Boden des Gepäckbehältnisses.

Die Arretierungsvorrichtung ist dazu vorgesehen, die Tasche in der Soll-Position zu arretieren und gegen ein unbeabsichtigtes Lösen zu sichern.

Beispielsweise umfasst die mindestens eine lösbare Arretierungsvorrichtung jeweils einen lösbaren Verrastmechanismus, insbesondere einen lösbaren Verrastmechanismus mit mindestens einem Druckknopf und/oder mindestens einer Rastnase. Der Verrastmechanismus kann beim Einsetzen der Tasche automatisch verrasten oder vom Nutzer manuell verrastet werden. Entsprechend ist der Verrastmechanismus vor der Entnahme der Tasche zu lösen.

Selbstverständlich kann die lösbare Arretierungsvorrichtung alternativ eine Schraubverbindung umfassen. Diese ist jedoch für den Nutzer nur mit zusätzlichem Werkzeug und mit erhöhtem Aufwand zu lösen.

Gemäß einer bevorzugten Ausführungsform sind eine erste Arretierungsvorrichtung im Bereich der Verbindungsanordnung und eine zweite Arretierungsvorrichtung im Bereich der Zentriervorrichtung angeordnet.

Als Gepäckbehältnis ist insbesondere ein Koffer, vorzugsweise ein Koffer für ein Motorrad oder ein motorradähnliches Fahrzeug, insbesondere ein Top-Case oder ein Seitenkoffer, zu verstehen. Bei derartigen Fahrzeugen sind besonders hohe dynamische Bewegungen üblich, die zu entsprechenden Trägheitskräften auf das Gepäck führen und eine entsprechende Gepäcksicherung erforderlich machen.

Als motorradähnliches Fahrzeug sind insbesondere alle Einspurfahrzeuge aber auch Mehrspurfahrzeuge jeweils mit entsprechender sattelförmiger Sitzbank für den Nutzer zu verstehen, besonders bevorzugt zweirädrige, dreirädrige oder vierrädrige Motorroller und Scooter, aber auch Quads oder Trikes.

Als Tasche sind beispielsweise "weiche" Behältnisse aus einem Textilgewebe aber auch Behältnisse mit einer harten Außenschale zu verstehen. Wie beschrieben, ist die Größe der Tasche zum Einsetzen in das Innere des Gepäckbehältnisses angepasst und entsprechend gleich oder kleiner als der Gepäckraum ausgeführt.

Beispielsweise kann die Tasche zum sicheren Verstauen von (im Vergleich zur Größe des Gepäckraums) kleinen Gegenständen, wie zum Beispiel Reiseutensilien oder elektronischer Unterhaltungselektronik, Mobiltelefonen oder dergleichen, ausgeführt sein.

Zum Verschließen der Tasche kann außerdem ein Reißverschluss vorgesehen sein.

Des Weiteren kann das Gepäckbehältnis eine elektronische Kontaktierung bereitstellen, beispielsweise eine Strom-, Daten- und/oder Audioverbindung zum Fahrzeug. In der Tasche befindliche elektronische Geräte können damit leicht über entsprechende Kabel Strom- beziehungsweise Datenübertragend verbunden werden.

Die Erfindung wird nachfolgend anhand eines Ausführungsbeispiels unter Bezugnahme auf die Figuren näher erläutert. Es zeigen:
- Fig. 1: eine perspektivische Ansicht eines Seitenkoffers für ein Motorrad gemäß der Beschreibung,
- Fig. 2: eine Detailansicht A aus Fig. 1, und
- Fig. 3: eine Schnittansicht zu Fig. 2.

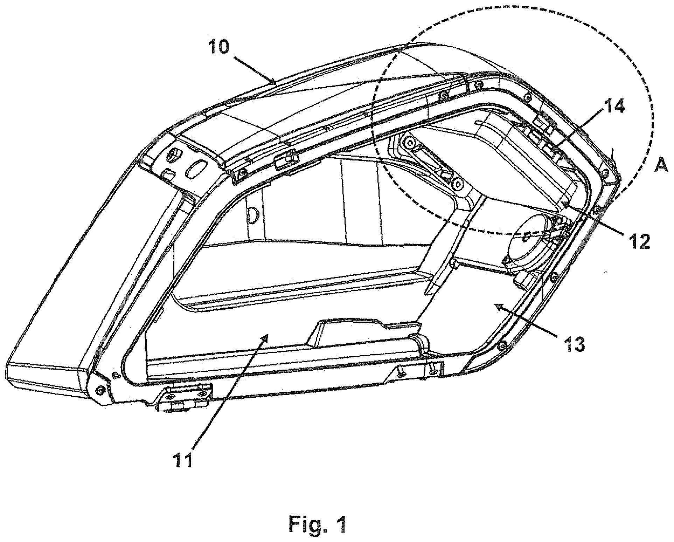

In Fig. 1 ist in einer perspektivischen Ansicht ein als Seitenkoffer für ein Motorrad ausgebildetes Gepäckbehältnis 10 dargestellt. Aus Gründen der besseren Darstellbarkeit ist ein Deckel zum Schließen eines von dem Gepäckbehältnis 10 umschlossenen Gepäckraumes 11 nicht abgebildet.

Das Gepäckbehältnis 10 umfasst eine integrierte Tasche 12, wobei das Gepäckbehältnis 10 eine den Gepäckraum 11 begrenzende Innenwandung 13 aufweist, und die Tasche 12 mittels einer Verbindungsanordnung 14 lösbar mit der Innenwandung 13 des Gepäckbehältnisses 10 verbunden ist.

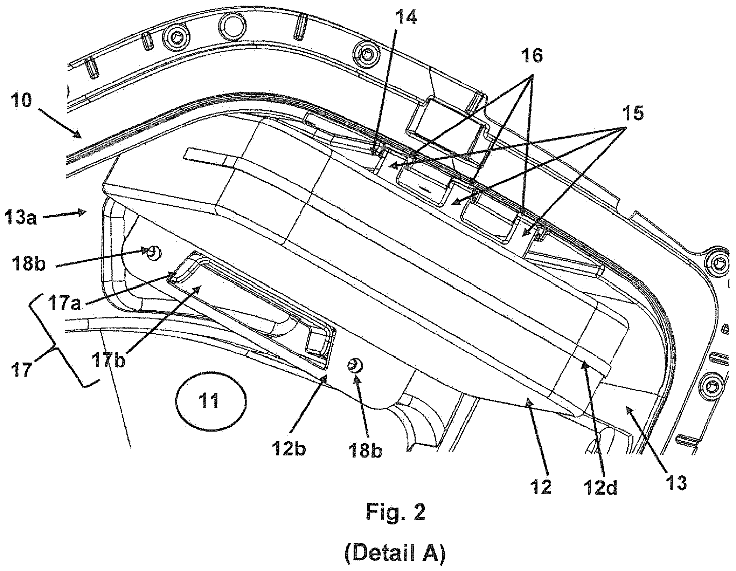

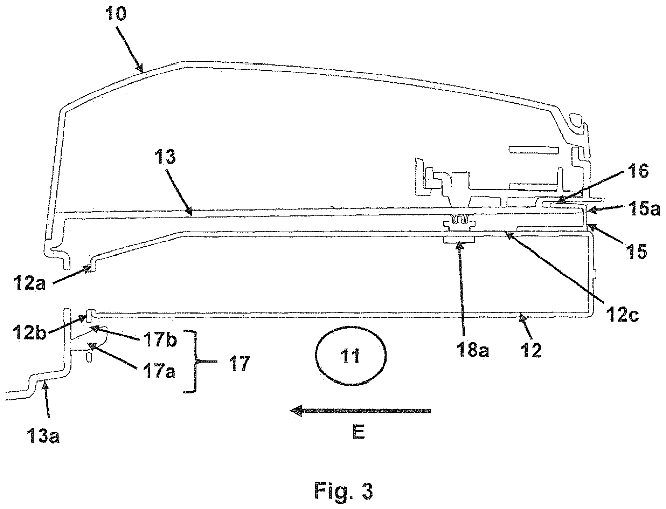

Fig. 2 und Fig. 3 zeigen eine Detailansicht A beziehungsweise eine Schnittansicht des Gepäckbehältnisses 10 aus Fig. 1, mit der integrierten Tasche 12, wobei die Verbindungsanordnung 14 an einer Oberseite 12c der Tasche 12 angeordnet ist und drei Verbindungsabschnitte 15 umfasst, welche lösbar in jeweils eine den jeweiligen Verbindungsabschnitt 15 aufnehmende Ausnehmung 16 eingreift und somit die Tasche 12 mit der Innenwand 13 verbindet. In der dargestellten Ausführungsform sind die drei Verbindungsabschnitte 15 der Tasche 12 und die aufnehmenden Ausnehmungen 16 der Innenwandung 13 zugeordnet. Es versteht sich, dass alternativ die Verbindungsabschnitte der Innenwandung und die aufnehmenden Ausnehmungen der Tasche zugeordnet sein können.

Jeder der drei Verbindungsabschnitte 15 ist hakenförmig ausgebildet, wie aus Fig. 3 erkennbar ist, wobei die Hakenform durch eine U-Form gebildet wird und jeweils ein äußerer Schenkel 15a des einzelnen Verbindungsabschnitts 15 beim Einschieben der Tasche 12 in einer Einschubrichtung E in die Ausnehmung 16 eingreift.

Zusätzlich umfasst das Gepäckbehältnis 10 eine Zentriervorrichtung 17, um die Tasche 12 in einer definierten Soll-Position, der in den Fig. 1 bis 3 dargestellten Einbau-Position, zu zentrieren. Die Zentriervorrichtung 17 weist eine Zentrierausnehmung 17b und einen in die Zentrierausnehmung 17b eingreifenden Zentrierfortsatz 17a auf. Die Zentriervorrichtung 17 erlaubt eine exakte Positionierung der Tasche 12 im Gepäckraum 11 des Gepäckbehältnisses 10 und verhindert eine seitliche Relativbewegung der Tasche 12 bezüglich der Innenwandung 13.

Hierzu ist der Zentrierfortsatz 17a an einer Rückwand 13a der Innenwandung 13 angeordnet. Je nach Ausrichtung und Ausgestaltung des Gepäckbehältnisses 10 kann die Rückwand auch ein "Boden" (nicht dargestellt) des Gepäckbehältnisses 10 sein.

Des Weiteren ist die Zentrierausnehmung 17b der Tasche 12 zugeordnet. Diese weist hierzu an einer Rückwand 12a der Tasche 12 einen Fortsatz 12b auf, in welchem die Zentrierausnehmung 17b vorgesehen ist. In der dargestellten Ausführungsform ist der Fortsatz 12b lediglich beispielsweise als Platte an der Rückseite 12a der Tasche 12 angebracht.

Außerdem umfasst die Tasche 12 zwei lösbare Arretierungsvorrichtungen 18a, 18b, mit deren Hilfe die Tasche 12 in der definierten Soll-Position mit der Innenwandung 13 lösbar verbindbar ist. Eine erste lösbare Arretierungsvorrichtung 18a ist auf der Oberseite 12c der Tasche 12 im Bereich der Verbindungsanordnung 14 angeordnet. Eine zweite lösbare Arretierungsvorrichtung ist im Bereich der Zentriervorrichtung 17 zum Verbinden der Tasche 12 mit der Rückwand 13a des Gepäckbehältnisses 10 vorgesehen.

Jede der beiden lösbaren Arretierungsvorrichtungen 18a, 18b umfasst jeweils einen lösbaren Verrastmechanismus. Dieser wird für die erste Arretierungsvorrichtung 18a von einem einzelnen Druckknopf und für die zweite Arretierungsvorrichtung 18b von zwei Druckknöpfen gebildet, die zu beiden Seiten der Zentrierausnehmung 17b angeordnet sind. Alternativ ist anstelle der Druckknöpfe auch eine Verwendung von geeigneten Rastnasen möglich. Die Tasche 12 kann beispielsweise als "weiches" Behältnis aus einem Textilgewebe aber auch als Behältnis mit einer harten Außenschale gefertigt sein. Mit Hilfe eines Reißverschlusses 12d ist ein Verschließen der Tasche 12 möglich.

Anstelle des dargestellten Seitenkoffers kann das Gepäckbehältnis 10 beispielsweise auch als Top-Case ausgebildet sein.

## Patentansprüche

1. Gepäckbehältnis mit integrierter Tasche, wobei das Gepäckbehältnis (10) eine einen Gepäckraum (11) begrenzende Innenwandung (13) aufweist, und die Tasche (12) mittels einer Verbindungsanordnung (14) lösbar mit der Innenwandung (13) des Gepäckbehältnisses (10) verbunden ist, wobei die Verbindungsanordnung (14) mindestens einen Verbindungsabschnitt (15) umfasst, welcher lösbar in jeweils eine den Verbindungsabschnitt (15) aufnehmende Ausnehmung (16) eingreifend ausgebildet ist,
**dadurch gekennzeichnet, dass** die Tasche (12) mittels mindestens einer lösbaren Arretierungsvorrichtung (18a,18b) mit der Innenwandung (13) zum Arretieren in einer definierten Soll-Position verbindbar ist.

2. Gepäckbehältnis nach Anspruch 1, **dadurch gekennzeichnet, dass** der mindestens eine Verbindungsabschnitt (15) hakenförmig oder laschenförmig ausgebildet ist.

3. Gepäckbehältnis nach mindestens einem der Ansprüche 1 oder 2, **dadurch gekennzeichnet, dass** der mindestens eine Verbindungsabschnitt (15) der Tasche (12) und die aufnehmende Ausnehmung (16) der Innenwandung (13) zugeordnet sind, oder der mindestens eine Verbindungsabschnitt (15) der Innenwandung (13) und die aufnehmende Ausnehmung (16) der Tasche (12) zugeordnet sind.

4. Gepäckbehältnis nach mindestens einem der Ansprüche 1 bis 3, **dadurch gekennzeichnet, dass** das Gepäckbehältnis (10) eine Zentriervorrichtung (17) umfasst, um die Tasche (12) in einer definierten Soll-Position zu zentrieren.

5. Gepäckbehältnis nach Anspruch 4, **dadurch gekennzeichnet, dass** die Zentriervorrichtung (17) eine Zentrierausnehmung (17b) und einen in die Zentrierausnehmung (17b) eingreifenden Zentrierfortsatz (17a) umfasst.

6. Gepäckbehältnis nach Anspruch 5, **dadurch gekennzeichnet, dass** der Zentrierfortsatz (17a) an einer Rückwand (13a) der Innenwandung (13) und/oder an einem Boden der Innenwandung (13) angeordnet und die Zentrierausnehmung (17b) der Tasche (12), insbesondere einer Rückwand (12a) der Tasche (12), zugeordnet ist.

7. Gepäckbehältnis nach mindestens einem der Ansprüche 1 bis 6, **dadurch gekennzeichnet, dass** die Tasche (12) mittels der mindestens einen lösbaren Arretierungsvorrichtung (18a,18b) mit einer Rückwand (13a) und/oder einem Boden der Innenwandung (13) zum Arretieren in der definierten Soll-Position verbindbar ist.

8. Gepäckbehältnis nach Anspruch 7, **dadurch gekennzeichnet, dass** die mindestens eine lösbare Arretierungsvorrichtung (18a,18b) jeweils einen lösbaren Verrastmechanismus umfasst, insbesondere einen lösbaren Verrastmechanismus mit mindestens einem Druckknopf und/oder mindestens einer Rastnase.

9. Gepäckbehältnis nach mindestens einem der Ansprüche 7 oder 8, **dadurch gekennzeichnet, dass** eine erste Arretierungsvorrichtung (18a) im Bereich der Verbindungsanordnung (14) und eine zweite Arretierungsvorrichtung (18b) im Bereich der Zentriervorrichtung (17) angeordnet sind.

10. Gepäckbehältnis nach mindestens einem der Ansprüche 1 bis 9, **dadurch gekennzeichnet, dass** das Gepäckbehältnis (10) ein Koffer für ein Motorrad oder ein motorradähnliches Fahrzeug, insbesondere ein Top-Case oder ein Seitenkoffer, ist.

11. Gepäckbehältnis nach mindestens einem der Ansprüche 1 bis 10, **dadurch gekennzeichnet, dass** die Tasche (12) ein Textilgewebe umfasst.

## Claims

1. A luggage container with an integrated pocket, wherein the luggage container (10) has an inner wall (13) defining a luggage compartment (11), and the pocket (12) is connected detachably to the inner wall (13) of the luggage container (10) by means of a connection arrangement (14), wherein the connection arrangement (14) comprises at least one connection portion (15) which is designed to engage detachably in one recess (16) in each case which receives the connection portion (15),
**characterised in that** the pocket (12) can be connected by means of at least one detachable locking device (18a, 18b) to the inner wall (13) for locking in a defined desired position.

2. A luggage container according to Claim 1, **characterised in that** the at least one connection portion (15) is hook-shaped or tab-shaped.

3. A luggage container according to at least one of Claims 1 or 2, **characterised in that** the at least one connection portion (15) is associated with the pocket (12) and the receiving recess (16) with the inner wall (13), or the at least one connection portion (15) is associated with the inner wall (13) and the receiving recess (16) with the pocket (12).

4. A luggage container according to at least one of Claims 1 to 3, **characterised in that** the luggage container (10) comprises a centring device (17) in order to centre the pocket (12) in a defined desired position.

5. A luggage container according to Claim 4, **characterised in that** the centring device (17) comprises a centring recess (17b) and a centring projection (17a) which engages in the centring recess (17b).

6. A luggage container according to Claim 5, **characterised in that** the centring projection (17a) is arranged on a rear wall (13a) of the inner wall (13) and/or on a base of the inner wall (13) and the centring recess (17b) is associated with the pocket (12), especially a rear wall (12a) of the pocket (12).

7. A luggage container according to at least one of Claims 1 to 6, **characterised in that** the pocket (12) can be connected by means of the at least one detachable locking device (18a, 18b) to a rear wall (13a) and/or a base of the inner wall (13) for locking in the defined desired position.

8. A luggage container according to Claim 7, **characterised in that** the at least one releasable locking device (18a, 18b) comprises in each case a detachable latching mechanism, especially a detachable latching mechanism with at least one pushbutton and/or at least one latching nose.

9. A luggage container according to at least one of Claims 7 or 8, **characterised in that** a first locking device (18a) is arranged in the region of the connection arrangement (14) and a second locking device (18b) is arranged in the region of the centring device (17).

10. A luggage container according to at least one of Claims 1 to 9, **characterised in that** the luggage container (10) is a case for a motorcycle or a vehicle similar to a motorcycle, especially a top case or a side case.

11. A luggage container according to at least one of Claims 1 to 10, **characterised in that** the pocket (12) comprises a textile fabric.

## Revendications

1. Réceptacle à bagages ayant une poche intégrée, ce réceptacle à bagages (10) comportant une paroi interne (13) délimitant un espace de bagages (11) et la poche (12) étant reliée de façon amovible à la paroi interne (13) du réceptacle à bagages (10) par l'intermédiaire d'un dispositif de liaison (14), le dispositif de liaison (14) comportant au moins un segment de liaison (15) venant en prise de façon amovible dans un évidement (16) recevant ce segment de liaison (15),
**caractérisé en ce que**
la poche (12) peut être reliée au moyen d'au moins un dispositif de blocage amovible (18a, 18b) à la paroi interne (13) pour permettre son blocage dans une position de consigne définie.

2. Réceptacle à bagages conforme à la revendication 1,
**caractérisé en ce que**
le segment de liaison (15) est réalisé en forme de crochet ou de languette.

3. Réceptacle à bagages conforme à au moins l'une des revendications 1 et 2,
**caractérisé en ce que**
le segment de liaison (15) de la poche (12) et le logement de réception (16) de la paroi interne (13) sont associés ou le segment de liaison (15) de la paroi interne (13) et l'évidement de réception (16) de la poche (12) sont associés.

4. Réceptacle à bagages conforme à au moins l'une des revendications 1 à 3,
**caractérisé en ce qu'**
il comporte un dispositif de centrage (17) permettant de centrer la poche (12) dans une position de consigne définie.

5. Réceptacle à bagages conforme à la revendication 4,
**caractérisé en ce que**
le dispositif de centrage (17) comporte un évidement de centrage (17b) et un prolongement de centrage (17a) venant en prise dans l'évidement de centrage (17b).

6. Réceptacle à bagages conforme à la revendication 5,
**caractérisé en ce que**
le prolongement de centrage (17a) est situé sur une partie arrière (13a) de la paroi interne (13) et/ou au fond de la paroi interne (13) et l'évidement de centrage (17b) est associé à la poche (12), en particulier à une paroi arrière (12a) de la poche (12).

7. Réceptacle à bagages conforme à au moins l'une des revendications 1 à 6,
**caractérisé en ce que**
la poche (12) peut être reliée au moyen du dispositif de blocage amovible (18a, 18b) avec la partie arrière (13a) et/ou le fond de la paroi interne (13) pour permettre son blocage dans la position de consigne définie.

8. Réceptacle à bagages conforme à la revendication 7,
**caractérisé en ce que**
le dispositif de blocage amovible (18a, 18b) comporte un mécanisme d'encliquetage amovible, en particulier un mécanisme d'encliquetage amovible ayant au moins un bouton-poussoir et/ou au moins un bec d'encliquetage,

9. Réceptacle à bagages conforme à au moins l'une des revendications 7 et 8,
**caractérisé en ce qu'**
un premier dispositif de blocage (18a) est situé dans la zone du dispositif de liaison (14) et un second dispositif de blocage (18b) est situé dans la zone du dispositif de centrage (17).

10. Réceptacle à bagages conforme à au moins l'une des revendications 1 à 9,
**caractérisé en ce qu'**
il est constitué par un coffre pour une moto ou un véhicule de type moto, en particulier un Top-Case ou un coffre latéral.

11. Réceptacle à bagages conforme à au moins l'une des revendications 1 à 10,
**caractérisé en ce que**
la poche (12) renferme un tissu textile.
